# EUROPEAN PATENT SPECIFICATION

(11) **EP 3 554 801 B1**
(45) Date of publication and mention of the grant of the patent: **26.06.2024**
(21) Application number: 17832760.7
(22) Date of filing: 13.12.2017
(51) Int. Cl.: B29C 65/48, B29C 65/78, B62D 27/02, B62D 29/00, C09J 5/06, F16B 11/00, B29C 65/14, B29C 65/36, B29C 65/52, B29C 65/54

(54) **INSTANT PRE-FIXATION OF ADHESIVE BONDED INSERT PARTS WHICH ARE PREFERABLY MADE OF PLASTIC WITH THE HELP OF CHEMICAL SCREWS**
SOFORTIGE VORFIXIERUNG VON GEKLEBTEN EINLEGETEILEN, DIE BEVORZUGT AUS KUNSTSTOFF GEFERTIGT SIND, MITHILFE VON CHEMISCHEN SCHRAUBEN
PRÉ-FIXATION INSTANTANÉE À L'AIDE DE VIS CHIMIQUES D'INSERTS COLLÉS DE PRÉFÉRENCE EN MATIÈRE PLASTIQUE

(30) Priority: 14.12.2016 EP 16204166
(43) Date of publication of application: 23.10.2019
(73) Proprietor: Sika Technology AG, 6340 Baar (CH)
(72) Inventor: RHEINEGGER, Urs, 8105 Regensdorf (CH); SOUVAY, Denis, 8953 Dietikon (CH)
(74) Representative: Sika Patent Attorneys
(86) International application number: PCT/EP2017/082703
(87) International publication number: WO 2018/109045

(56) References cited:
- EP-A1- 2 899 100
- WO-A1-2012/127185
- DE-A1- 4 431 991
- DE-A1- 19 943 714
- US-A1- 2007 035 157
- US-A1- 2016 311 473

## Description

The present application is directed at an assembly comprising a substrate 1, a substrate 2 and heat curable adhesive, which is positioned between the substrates 1 and 2, wherein the heat curable adhesive is cured only in a portion of less than 50% of the entire surface covered by the heat curable adhesive. The partial curing of the adhesive ensures that the substrate is tightly held in place during further steps of processing which are carried out after the fixation, while the adhesive can be finally cured or fully cured at a later stage. The present application is further directed at several processes for the manufacture of corresponding assemblies as well as the use of these processes in the manufacture of a vehicle.

### State of the art

In the field of automotive or vehicle manufacture, it is customary, that many parts such as profiles have cavities which are filled with plastic components to provide for reinforcement. These plastic components are regularly fixed via an adhesive on the metallic profiles so as to avoid displacement during the further processing of the profile.

DE4431991 A1 and US2016/311473 A1 disclose the assembly of substrates with heat curable adhesive, which is positioned between the substrates, wherein the heat curable adhesive is cured only in a portion of the entire surface covered by the heat curable adhesive.

Regularly, hollow profiles are subjected to an e-coat process to improve their resistivity towards rust formation. The e-coat process involves i.a. submerging a metal part into an e-coat bath, and subsequently drying and affixing the coat in an e-coat oven.

Within the fabrication process, it may be desirable to insert a plastic component into a profile prior to the e-coat process. This can regularly be accomplished by applying one or more adhesive beads onto a profile, positioning the plastic component on top of the adhesive beads, and, if necessary, applying of a further adhesive bead onto the plastic component and subsequently placing a further plate on the profile, thus forming a sandwich of the profile and upper plate with the plastic component in-between and the respective adhesive parts being positioned between the plastic component, the profile and the cover plate. After the fabrication of the assembly, the assembly is regularly further processed and moved, so that the plastic component can be displaced during the further processing. Therefore, depending on the circumstances it usually is necessary to cure the adhesive or otherwise fix the plastic component prior to further processing of the filled profile.

The curing as it is conducted in the state of the art is time-consuming and energy-intensive, in particular given the fact, that during the e-coating process the material is subjected to temperatures which are sufficient to cure the adhesives regularly used in this process. However, as explained above, since the profiles are processed after assembly and prior to e-coating, there is a significant risk of a displacement if the adhesive is not cured.

Accordingly, there is a need for a technology which minimizes the energy and time requirements for the assembly and subsequent e-coating process in the state of the art.

A solution to temporarily fix a plastic component in a profile is fixation by means of clips. This solution unfortunately suffers from the disadvantage that holes are needed in the surrounding sheet metal, into which the clips can engage. This has the disadvantage, that depending on the application one or more processing steps to create the corresponding holes would have to be added. In addition, in regular vehicle manufacture the plastic parts as discussed above are often applied to the profiles by robots. By experience, it is known that it is very difficult have robots to fix such plastic parts into a steel section by means of clips as the precision of such a fixation is not very high.

In addition, the requirement of holes has disadvantages for the profile's strength in crash performance as weak spots in the material are created. Since the filling of metal profiles with reinforcing materials such as plastic components regularly aims at increasing the strength of the profile, this technology it is often used with ultra-high strength steel boron steel because of their good performance in crash. For these materials, it would be counterproductive to create holes when trying to provide a material with improved strength performance.

A second means to fix a plastic component in a metal profile is the fixation by means of metal brackets. This kind of fixation is carried out by fixing additional metal brackets on the plastic parts or by directly injecting the brackets into the plastic parts. When the plastic part is then inserted into the profile, the fixation is accomplished by welding points between the metal brackets and the sheet metal of the body. However, this technology has the same disadvantages as discussed above as welding points on materials such as ultra-high strength steel or boron steel, which are used because of their good performances in crash events, locally change the structure of the steel and create local weaknesses in the material. In addition, this solution also suffers from the disadvantage that additional components are needed which have to be produced and assembled on the plastic part. Finally, the brackets themselves represent an additional production costs rendering the process less commercially effective.

As is evident from the above, there is a need for a fixation process of a plastic component in a profile, which obviates the necessity of creating holes or welding points in the profiles material.

This applies in particular, since more and more aluminium is used in the vehicle industry for the production of vehicles to minimize their weight, thus reducing the gasoline consumption. As aluminium in comparison with steel is a material which can more easily be deformed for example in a crash, the provision of plastic reinforced aluminium profiles with increased physical stability becomes more and more important.

The present application addresses these needs.

### Description of the invention

The invention is therefore based on the problem of providing a suitable fixation means which is sufficient to fix a plastic component inside a metal profile to allow for further processing of the profile within vehicle manufacture which avoids the necessity of creating additional holes and/or welding spots on the metal parts to obviate the problem of the generation of local points of weakness in the material. On the other hand, the process of the present application is energy-effective in that not the entirety of the adhesive is cured, e.g. prior to an e-coat processing of the profile, but only a small part thereof, so that the cured parts act much like a "chemical screw" which sufficiently fixes the plastic component to the profile until the adhesive is fully cured, e.g. in a later e-coat process.

Accordingly, one aspect of the present application is directed at an assembly according to claim 1.

The method employed for the preparation of such an assembly is not specifically limited. However, in a first preferred alternative the process comprises the steps of
(i) placing at least one heat curable adhesive bead on a substrate 1,
(ii) placing a further substrate 2 on the heat curable adhesive bead such that the substrate 1 and 2 are on opposite sides of the bead, and
(iii) applying heat to the heat curable adhesive only in a portion of less than 50% of the entire surface covered by the bead of the heat curable adhesive to cure the adhesive.

In a second preferred alternative, the process comprises the steps of
(i) placing a substrate 1 on a substrate 2 in a manner, that there is a hollow space between the substrates 1 and 2,
(ii) injecting a flowable heat curable adhesive into the hollow space between the substrates 1 and 2,
(iii) applying heat to the flowable heat curable adhesive only in a portion of 50% of the entire surface covered by the flowable adhesive to cure the adhesive.

The advantage of this process over the first alternative is that it allows the fabrication of closed profiles such as rolled steel or aluminium extrudes profiles. The term "flowable" means that the adhesive at the temperature at which it is applied has to be sufficiently fluid to be able to be injected and fill the hollow space. This does not necessarily mean that the adhesive has to be fluid a ambient temperature (25°C) as it is well within the ambit of this application that the adhesive is injected at a temperature which is higher than ambient temperature (such as 50 to 80°C). Suitable viscosities of the flowable heat curable adhesive are provided in the further description.

In a third preferred alternative, the process comprises the steps of
(i) Placing a substrate 1 on a substrate 2, wherein the substrate 2 has a layer of heat curable adhesive on at least one side of the substrate and wherein the substrate 2 is placed on the substrate 1 in a manner so that there is direct contact between the substrate 1 and the curable adhesive on the substrate 2,
(ii) applying heat to the curable adhesive only in a portion of 50% of the entire surface covered by the heat curable adhesive to cure the adhesive.

This process has the advantage that no separate step of applying the adhesive on the substrate 1 is required in the final process stages, as e.g. it is possible to apply the adhesive on the substrate 2 in a different facility and to then ship the substrate with the adhesive applied thereon to the final assembly facility.

In a forth preferred alternative, the process comprises the steps of
(i) placing an expandable heat curable adhesive on a substrate 2, wherein the expandable curable adhesive is self-adherent at 25°C,
(ii) placing a substrate 1 over the expandable heat curable adhesive on the substrate 2 such that the substrate 1 contacts the expandable heat curable adhesive, or that there is a gap between the expandable heat curable adhesive and the substrate 2, which is filled with the heat curable adhesive upon expansion,
(iii) applying heat to the expandable heat curable adhesive only in a portion of 50% of the entire surface covered by the heat curable adhesive to cure the adhesive.

The term self-adherent as mentioned above means that the adhesive has a surface tack at ambient temperature such that if the surface of a sample with an intrinsic weight of 50 g had been pressed with the thumb, exerting a pressure of 5 kg for 1 second, said sample could be lifted up for at least 5 seconds.

The above process is of particular advantage for the preparation of assemblies in which the gap between the two substrates is larger than the heat curable adhesive in the non-expanded state, but sufficiently small to be filed by the expandable heat curable adhesive upon expansion. In addition, the process is advantageous for the preparation of assemblies wherein the gap is so small that it is substantially filed by the expandable heat curable adhesive in the unexpanded state, but where the adhesivity of the material is not sufficient to ensure fixation during further processing steps, in which the adhesive is not fully cured.

As indicated above, the curable adhesive is cured only in a portion thereof. This means, that if for example the adhesive is applied in the form of a string, less than half of the string's length is cured by the application of heat during step (iii). If the adhesive is applied as a flowable adhesive, curing in a portion thereof means that not the whole surface, where the adhesive is present between the two substrates, is cured so that in some areas of the surface the adhesive is present in a flowable form whereas in others it is present in cured form. There is, however, no limitation that this portion must be a continuous portion but in the contrary, in a preferred embodiment of the present application, the portion is a discontinuous portion which may have, in the case of an adhesive string, uncured portions of the same or a different length between the individual cured parts of the adhesive.

The "heat curable adhesive" is an adhesive which can be cured by the application of heat. Regularly, the heat-curable adhesive in its uncured form is either a tacky paste or not tacky to the touch and only upon heating is sufficiently wetted to effect bonding and adhesion to the substrates.

If in the above, it is referred to a "percentage of the entire surface covered by the bead of the heat curable adhesive", this surface applies to the dimension of the bead, in which the bead has the longest extension. For example, if the bead is a string, 50% of the surface corresponds to 50% of the length of the string. If the bead is a sheet, 50% of the entire surface covered by the bead corresponds to 50% of the dimension of the sheet.

If in the above, it is referred to a "percentage of the entire surface covered by the flowable adhesive of the heat curable adhesive", this surface applies to the two dimensions of space filed by the adhesive, which have a longer extension than the third dimension. E.g. if the flowable adhesive is used to fill a space of 1 cm height in a gap with 10 cm width and 50 cm length, the surface is defined by the width and the length.

For the above mentioned case that the substrate 2 has a layer of heat curable adhesive on at least on side of the substrate, the adhesive may cover the entire surface of the substrate on at least one side thereof, but it is also possible that the adhesive only covers a part of the side of the substrate. Moreover, it is possible that the adhesive may extend over the side of the substrate, e.g. if the adhesive is in form of a sheet, if may extend over the edges of the substrate.

When in the above, it is indicated that the substrate 2 is placed "on the heat-curable adhesive bead", this means, that the substrate 2 is positioned over the heat-curable adhesive bead in a manner, that the adhesive bead's surface (seen from the direction of the substrate 2) is covered preferably by at last 70%, more preferably by at least 80%, even more preferably by at least 90% and most preferably by 100%. In the last case, the heat-curable adhesive bead is not visible, when the sandwich of substrate 1, head curable and substrate 2 is seen from the direction of substrate 2.

When in the above it is indicated that the a flowable heat curable adhesive is injected into the hollow space between the substrates 1 and 2, this means, that the flowable heat curable adhesive is injected in a manner, that the adhesives surface (seen from the direction of the substrate 2) covers preferably at least 70%, more preferably by at least 80%, even more preferably by at least 90% and most preferably by at least 95% of the surface of the substrate 1 and 2, respectively.

For the above mentioned process, it is not of particular importance how the hollow space is generated. E.g. it is possible that the substrate 2 may have protrusions by which it contacts the substrate 1, thus forming a hollow space in the non-contacting parts. In addition it is possible to insert spacers between the substrates 1 and 2 to generate the hollow space, which is advantageous if both substrates are substantially flat.

In a preferred embodiment of the present application, the heat is applied to the heat-curable adhesive only in a portion of less than 30%, preferably less than 20% and more preferably less than 10% of the entire surface covered by the bead, the flowable heat curable adhesive, the heat curable adhesive or the expandable heat curable adhesive as indicated above respectively. On the other hand, to achieve sufficient fixation of the heat-curable adhesive on substrates 1 and 2, it must be ensured that the portion of cured material is sufficient to ensure a proper fixation of the substrate during subsequent processing. It is thus advisable, that the heat is applied to the heat-curable adhesive in a portion of 0.5% or more, preferably 1% or more, more preferably 2% or more and even more preferably 3% or more of the entire surface covered by the bead, the flowable heat curable adhesive, the heat curable adhesive or the expandable heat curable adhesive, respectively.

The "bead" in the practice of the present application is a bead of any shape and is not limited to spherical or circular beads. For example, the bead may have the form of a string or could have a rectangular or a triangular shape.

In the practice of the present application it is preferred, that during the process the heat is applied to more than one independent areas of the entire surface covered by the bead, the flowable heat curable adhesive, the heat curable adhesive or the expandable heat curable adhesive, respectively, as this ensures sufficient fixation without having to cure a large portion of the beads entire surface. Concerning the means to apply the heat, the process of the present application is not particularly limited with the exception, that the means must allow a heating of only a part of the adhesive's entire surface. Appropriate and preferred methods for heat-curing the heat-curable adhesive are application by means of induction, infrared, microwaves or ultrasound. From among these, induction is particularly preferred as it allows the selective heating of a very small portion of the adhesive via a point or circular shaped induction source.

It is evident that if either of the substrates 1 and 2 is a metal based substrate, the heating is preferably applied by indirect heating, e.g. by heating the metal via induction thus transferring the heat to the adhesive.

In a further preferred embodiment of the present application, the process according to the first alternative mentioned above next to steps (i) to (iii) involves the steps of (iv) placing at least one heat curable adhesive bead on the side of substrate 2, which is opposite to the side facing the substrate 1, (v) placing a further substrate 3 on the heat curable adhesive bead placed in step (iv) such that the substrate 2 and 3 are on opposite sides of the bead, wherein the heat in step (iii) is applied to each of the heat curable adhesive beads only in a portion of less than 50% of the respective beads entire surface to cure the adhesive. Such a process provides a sandwich structure in which the substrates 1 and 3 form the outer layers and the adhesive is sandwiched between these outer layers with the substrate 2 in-between.

In this process it is not decisive whether the adhesive between the substrates 1 and 2 is cured prior to the application of adhesive between the substrates 2 and 3, or whether these adhesives are cured at the same time. Thus, in one embodiment the adhesives are cured at the same time in step (iii). In another embodiment, the adhesive between the substrates 1 and 2 is cured prior to the curing of the adhesive between the substrates 2 and 3, and preferably prior to placing the adhesive between the substrates 2 and 3.

Likewise, it is possible to use the process for the production multi-layer assemblies with further substrates 4, 5, 6 etc. In this case, the steps (iv) to (vi) can simply be repeated using substrates 4, 6, etc. as a replacement of substrate 2 and substrates 5, 7, etc. as a replacement of substrate 3.

In case the process is according to the second alternative mentioned above the process can similarly be modified with steps of (iv) placing a further substrate 3 on the substrate 2 in a manner, that there is a hollow space between the substrates 2 and 3, and (v) injecting a flowable heat curable adhesive into the hollow space between the substrates 2 and 3 (iv), wherein the heat in step (iii) is applied to each of the flowable heat curable adhesives between the substrates 1 and 2 and 2 and 3, respectively, only in a portion of less than 50% of the entire surface covered by the flowable heat curable adhesive to cure the adhesive.

Since the preferred application field of the inventive process is in vehicle manufacture, the substrate 1 is a metal substrate, in particular an aluminium or a steel substrate such as cold rolled or hydroformed steel, and even more preferably an ultra-high strength steel or a boron steel substrate.

Similar materials are preferred for the substrate 3, 5, 7, etc. if present.

Concerning the substrate 2 (and 4, 6, etc., if present), it is an extruded or moulded plastic carrier. Suitable materials for the preparation of corresponding plastic carriers include e.g. polyamides and polybutyleneterephthalate as well as other light weight material (i.e. having a density of 1 g/cm³ or less, preferably 0.5 g/cm³ or less) with are stable at temperatures of up to 200°C and preferably up to 220°C.

For the above mentioned fourth preferred alternative of the process the substrate 2 is preferably a material as indicated above for substrate 1.

According to the invention, the substrate 1 has the shape of a profile such as, e.g., an U-type shape having a flat bottom portion and two side portions which extend upwards from the bottom portion, preferably in an angle of between about 80° to about 135° (this angle is determined between the bottom plate and the upward projecting side portion.)

The substrate 3 in such case is can be a flat substrate or can have a U- or other shape as well.

The substrate 2 can have any shape which sufficiently fills the cavity of the substrate 1 and 3, if present, and preferably fills at least 50 vol.-%, more preferably at least 60% vol.-%, and even more preferably at least 70 vol.-% of the inner volume formed by the substrate 1 or between the substrates 1 and 3. While the exact volume is not of high importance, the volume should be appropriate to ensure sufficient reinforcement if the assembly is e.g. subjected to an e-coat process.

The heat curable adhesive preferably has a curing temperature in the range of 120 °C to 220 °C, more preferably of 160°C to 200°C.

In a preferred embodiment of the inventive process as discussed in the first and second alternative, the heat-curable adhesive is an epoxy- or polyurethane-based adhesive.

Suitable heat curable epoxy-based adhesives comprise at least one epoxy resin **A** and at least one hardener **B** for epoxy resins, which is activated by an increased temperature. In particular, it is a one-component epoxy resin composition.

If the heat curable adhesive is an epoxy resin composition it contains at least one epoxy resin having an average of more than one epoxy group per molecule. The epoxy group preferably takes the form of a glycidyl ether group. The epoxy resin having an average of more than one epoxy group per molecule is preferably a liquid epoxy resin or a solid epoxy resin. The term "solid epoxy resin" is very familiar to the person skilled in the art of epoxies and is used by contrast to "liquid epoxy resins". The glass transition temperature of solid resins exceeds room temperature, meaning that they can be comminuted at room temperature to give pourable powders.

Preferred solid epoxy resins have the formula (I)

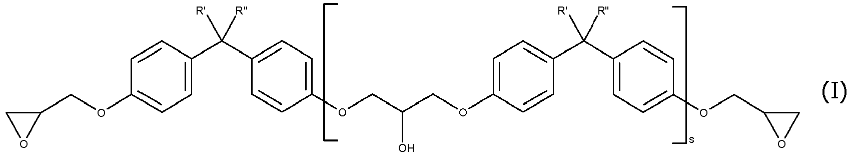

The substituents R' and R" here are each independently either H or CH₃.

In addition, the index s is a value of > 1.5, especially of 1.5 to 12, preferably 2 to 12.

Solid epoxy resins of this kind are commercially available, for example from Dow or Huntsman or Momentive.

Compounds of the formula (I) having an index s in the range from greater than 1 to 1.5 are referred to by the person skilled in the art as semisolid epoxy resins. For this present invention, they are likewise considered to be solid resins. Preference is given, however, to solid epoxy resins in the narrower sense, i.e. solid epoxy resins of the formula (I) having an index s having a value of > 1.5.

Preferred liquid epoxy resins have the formula (II).

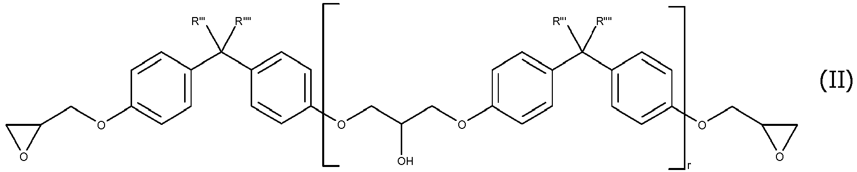

The substituents R‴ and Rʺʺ here are each independently either H or CH₃. In addition, the index r is a value from 0 to 1. Preferably, r is a value from 0 to less than 0.2.

The liquid resins are thus preferably diglycidyl ethers of bisphenol A (DGEBA), of bisphenol F and of bisphenol A/F (the expression 'A/F' refers here to a mixture of acetone with formaldehyde which is used as a reactant in the preparation thereof). Such liquid resins are available, for example, as Araldite^{®} GY 250, Araldite^{®} PY 304, Araldite^{®} GY 282 (Huntsman) or D.E.R.^{™} 331 or D.E.R.^{™} 330 (Dow) or Epikote 828 (Momentive).

Preferably, the epoxy resin is a liquid epoxy resin of the formula (II). In an even more preferred embodiment, the heat curable epoxy resin adhesive comprises both at least one liquid epoxy resin of the formula (II) and at least one solid epoxy resin of the formula (I).

The proportion of the epoxy resin having an average of more than one epoxy group per molecule is preferably 10% to 85% by weight, especially 15% to 70% by weight and more preferably 15% to 60% by weight, based on the total weight of the epoxy resin adhesive.

The heat curable epoxy resin adhesive further comprises at least one latent hardener for epoxy resins. Latent hardeners are essentially inert at room temperature and are activated by elevated temperature, typically at temperatures of 70°C or more, which starts the curing reaction. It is possible to use the standard latent hardeners for epoxy resins. Preference is given to a latent nitrogen-containing hardener for epoxy resins.

Examples of suitable latent hardeners are dicyandiamide, guanamines, guanidines, aminoguanidines and derivatives thereof; substituted ureas, especially 3-(3-chloro-4-methylphenyl)-1,1-dimethylurea (chlortoluron), or phenyldimethylureas, especially p-chlorophenyl-N,N-dimethylurea (monuron), 3-phenyl-1,1-dimethylurea (fenuron) or 3,4-dichlorophenyl-N,N-dimethylurea (diuron), and imidazoles and amine complexes.

A particularly preferred latent hardener is dicyandiamide.

The proportion of the latent hardener is preferably 0.5% to 12% by weight, more preferably 1% to 8% by weight, based on the total weight of the epoxy resin adhesive.

In another preferred embodiment, the heat curable adhesive or flowable heat curable adhesive is a hot-curing polyurethane composition.

Hot-curing polyurethane compositions are known to the person skilled in the art and can have different curing mechanism.

In a first embodiment polyurethane compositions are used, which have, in addition to a solid isocyanate group terminated polyurethane polymer, furthermore at least one aldimine, in particular a polyaldimine, as hardener. By increasing the temperature and softening of the polyurethane polymer which is caused by it, water, in particular, in the form of humidity, can enter into the polyurethane composition, thereby causing hydrolysis of the aldimines and thus a release of amines, which subsequently react with the isocyanate groups and result in the curing of the composition.

For example, such suitable hot-curing polyurethane compositions are described in WO 2008/059056 A1.

In a second embodiment, polyurethane compositions can be used, which, in addition to an isocyanate group terminated polyurethane polymer, have furthermore at least one hardener, which contains isocyanate-reactive groups and is present as a blocked form. The block can be of the chemical or physical type. Examples for suitable chemically blocked hardeners are polyamines bound to metals through complexation, in particular complex compounds of methylene dianiline (MDA) and sodium chloride. Such complex compounds are usually described with the molecular formula (MDA)₃·NaCl. A suitable type is available from Chemtura Corp., USA as dispersion in diethylhexyl phthalate under the trade name Caytur^{®} 21. The complex decomposes when heated to 80 to 160 °C with increasing rate at higher temperature releasing methylene dianiline as active hardener.

Examples for physically blocked hardeners are micro-encapsulated hardeners.

Particularly suited for use as hardeners in micro-encapsulated form are two or polyhydric alcohols, short-chain polyester polyols, aliphatic, cycloaliphatic and aromatic amino alcohols, hydrazides of dicarboxylic acids, aliphatic polyamines, cycloaliphatic polyamines, ether group-containing aliphatic polyamines, polyoxyalkylene polyamines, for example, available under the name Jeffamine^{®} (from Huntsman International LLC, USA), aromatic polyamines. Preferred are aliphatic, cycloaliphatic and aromatic polyamines, in particular, ethanol amine, propanol amine, butanol amine, N-methyl ethanolamine, diethanol amine, triethanol amine.

A detailed list of suitable hardeners for use in micro-encapsulated form can be found, for example, on page 14, starting at line 25 in WO 2009/016106 A1.

The micro-encapsulation of these hardeners can be performed according to one of the common methods, for example through spray drying, surface polymerization, coacervation, dip or centrifuge methods, fluidized bed methods, vacuum encapsulating, electro-static micro-encapsulation. The micro-capsules obtained have a particle size of 0.1 to 100 µm, preferably 0.3 to 50 µm. The size of the micro-capsules is dimensioned in such a way that on the one hand they open effectively when heated, and on the other hand, after curing, optimum homogeneity and thus cohesion strength of the heat curable adhesive is obtained. In addition, they may not have any damaging impact on the adhesion properties of the heat curable adhesive. Materials for the capsule shell may be polymers, which are insoluble in the hardener to be encapsulated and have a melting point of 50 to 150 °C. Examples for suitable polymers include hydrocarbon waxes, polyethylene waxes, wax ester, polyester, polyamides, polyacrylates, polymethacrylates or mixtures of several such polymers.

In a third embodiment, isocyanate groups terminated polyurethane polymers can be used, whose isocyanate groups were reacted with thermally unstable blocking groups, such as for example with caprolactam, or such, whose isocyanate groups were dimerized into thermally unstable uretdiones.

In a fourth embodiment, polyurethane compositions can be used, which comprise in addition to a hydroxyl group terminated polyurethane polymer and/or at least one polymer polyol, as described above, furthermore at least one encapsulated or surface-deactivated polyisocyanate as hardener. Encapsulated or surface-deactivated polyisocyanates are known to the person skilled in the art and described, for example, in EP 0 204 970 or in EP 0 922 720.

The above described are suitable polyisocyanates.

If the heat curable adhesive is a polyurethane composition, the components for its production, in particular, polyisocyanate and polyol, must be selected in regard to their molecular weight and their functionality preferably so that the polyurethane has a melting point, which is above room temperature, in particular, in the range of 23 to 95°C.

In the above mentioned first alternative of the inventive process the heat curable adhesive, if based on a polyurethane composition, is preferably a one-component hot-curing polyurethane composition, which has a solid consistency at room temperature.

In the above mentioned first alternative of the inventive process the heat curable adhesive is most preferably a one-component, hot-curing epoxy resin composition.

Concerning the second aspect of the inventive process it is also possible to employ an acrylate based adhesive. Such an adhesive is characterized in that it comprises, as a resin A that enters into polymerization reactions, at least one difunctional or polyfunctional monomer containing acrylic or methacrylic groups, and also at least one monofunctional monomer containing acrylic or methacrylic groups. Examples of suitable difunctional or polyfunctional monomers containing acrylic or methacrylic groups are acrylates and methacrylates of aliphatic polyether polyurethanes and polyester polyurethanes, polyethers, polyesters, novolaks, dihydric and polyhydric aliphatic, cycloaliphatic, and aromatic alcohols, glycols, and phenols. Examples of monofunctional monomers containing acrylic or methacrylic groups are methyl acrylate and methacrylate, ethyl acrylate and methacrylate, hexyl acrylate and methacrylate, dodecyl acrylate and methacrylate, tetrahydrofuryl acrylate and methacrylate, and also hydroxyl-containing acrylates and methacrylates such as 2-hydroxyethyl acrylate and methacrylate and 2-hydroxypropyl acrylate and methacrylate.

As a curing agent B the acrylate composition comprises a thermal initiator which is present in a blocked form and which initiates the polymerization of the acrylate or methacrylate monomers. Examples of suitable thermal initiators are diacyl peroxides such as benzoyl peroxide, lauroyl peroxide, and decanoyl peroxide; peroxydicarbonates such as dipropyl peroxydicarbonate; peroxyoxalates such as di-tert-butyl peroxyoxalate; and hyponitrites such as di-tert-butyl hyponitrite. Benzoyl peroxide is preferred. The blocked thermal initiator, more particularly benzoyl peroxide, is preferably in a microencapsulated form. The preparation of microencapsulated organic peroxides is described in EP 0 730 493 B1, for example.

Suitable acrylate adhesives are described e.g. in WO 02/070620 A1 and the literature specified therein. They consist of methacrylic esters such as methyl methacrylate and tetrahydrofurfuryl methacrylate and also aliphatic polyurethane acrylates, elastomers reacted with acrylic acid, such as polybutadiene-acrylonitrile copolymers (trade name HYCAR^{®} VTBNX) or core-shell polymers. Further suitable systems, composed essentially of mixtures of methacrylates with elastomers, are described in U.S. Pat. No. 3,890,407, U.S. Pat. No. 4,106,971, and U.S. Pat. No. 4,263,419, for example. Particularly suitable initiators are organic peroxides, especially benzoyl peroxide in combination with catalysts such as tertiary amines and/or complexes or salts of transition metals. Examples of tertiary amines are N,N-dimethylbenzylamine and N-alkyl-morpholine. Examples of complexes or salts of transition metals are complexes or salts of nickel, cobalt, and copper.

Suitable as curable adhesives for the above mentioned third alternative of the inventive process include expandable baffle materials based on e.g. ethylene-α,β ethylenically unsaturated carboxylic acid copolymers such as those described in US 5,266,133. Other suitable curable adhesives for this alternative of the inventive process include the mixed polystyrene/epoxy baffle materials described e.g. in US 6,387,470. Moreover, other expandable curable adhesives can also be used in this alternative as long as they fulfil the basic requirement that they are expandable upon heating and that at ambient temperature (25°C) they are essentially no tacky to the touch, while on heating they become sufficiently tacky to ensure bonding to a substrate.

As suitable expandable heat curable adhesives for the above mentioned fourth alternative of the inventive process adhesives based on liquid epoxy resins and corresponding hardeners, which are supplemented with polyurethane based impact modifiers and carboxyl- or epoxide-terminated acrylonitrile/butadiene copolymers can be mentioned. These curable adhesives preferably at room temperature exhibit only a very slight alteration in shape and develop a high surface tack in the uncured state, whereas in the cured state they exhibit high adhesion and a high impact strength.

The heat curable adhesive can comprise additional components, as they are usually used in heat curable adhesives.

In particular, the heat curable adhesive preferably comprises at least one toughener. A toughener, as this term is used herein designates an additive, which even in low amounts such as 0.1 to 50 wt.%, in particular 0.5 to 40 wt.-% provides a marked increase of the toughness, so that higher bending, tensile, shock, or impact stresses can be withstood before the matrix cracks or breaks.

The toughener can be either a solid or liquid toughener.

Solid tougheners are, in a first embodiment, organic ion-exchanged layered minerals. Such tougheners are described, for example, in U.S. Pat. No. 5,707,439 or U.S. Pat. No. 6,197,849.

Such solid tougheners that are especially suitable are familiar to the person skilled in the art under the term organoclay or nanoclay, and are commercially available, for example, under the group names Tixogel^{®} or Nanofil^{®} (Siidchemie), Cloisite^{®} (Southern Clay Products), or Nanomer^{®} (Nanocor, Inc.), or Garamite^{®} (Southern Clay Products).

Solid tougheners, in a second embodiment, are block copolymers. The block copolymer, for example, is obtained from an anionic or controlled free-radical polymerization of methacrylic acid ester with at least one other monomer having an olefinic double bond. Particularly preferred as a monomer having an olefinic double bond is one in which the double bond is conjugated directly with a hetero atom or with at least one other double bond. Particularly suitable monomers are selected from the group including styrene, butadiene, acrylonitrile, and vinyl acetate. Acrylate/styrene/acrylic acid (ASA) copolymers, available, for example, under the name GELOY 1020 from GE Plastics, are preferred.

Especially preferred block copolymers are block copolymers derived from methacrylic acid methyl ester, styrene, and butadiene. Such block copolymers are available, for example, as triblock copolymers under the group name SBM from Arkema.

Solid tougheners are, in a third embodiment, core/shell polymers. Core/shell polymers consist of an elastic core polymer and a rigid shell polymer. Particularly suitable core/shell polymers consist of a core made from elastic acrylate or butadiene polymer which is enclosed in a rigid shell made from a rigid thermoplastic polymer. This core/shell structure is either formed spontaneously through separation of a block copolymer or is determined by latex polymerization or suspension polymerization followed by grafting. Preferred core/shell polymers are "MBS polymers," which are available under the trade names Clearstrength^{™} from Atofina, Paraloid^{™} from Rohm and Haas, or F-351^{™} from Zeon.

Especially preferred are core/shell polymer particles that are already in the form of dried polymer latex. Examples are GENIOPERL M23A from Wacker with a polysiloxane core and an acrylate shell, radiation crosslinked rubber particles of the NEP series manufactured by Eliokem, or Nanoprene from Lanxess, or Paraloid EXIL from Rohm and Haas.

Other comparable examples of core/shell polymers are sold under the name Albidur^{™} by Nanoresins AG, Germany.

Solid tougheners are, in a fourth embodiment, solid reaction products of a carboxylated solid nitrile rubber and excess epoxy resin.

Liquid tougheners are preferably liquid rubbers or liquid tougheners based on a polyurethane polymer.

In a first embodiment, the liquid rubber is an acrylonitrile/butadiene copolymer terminated by carboxyl groups or (meth)acrylate groups or epoxy groups, or is a derivative thereof.

Such liquid rubbers are commercially available, for example, under the name Hypro^{™} (formerly Hycar^{®}) CTBN and CTBNX and ETBN from Nanoresins AG, Germany or Emerald Performance Materials LLC. Suitable derivatives are in particular elastomer-modified polymers having epoxy groups, such as are commercially marketed as the Polydis^{®} product line, preferably from the Polydis^{®} 36xx product line, by the Struktol Company (Schill & Seilacher Group, Germany) or as the Albipox product line (Nanoresins, Germany).

In a second embodiment, this liquid rubber is a polyacrylate liquid rubber that is completely miscible with liquid epoxy resins, and only separates into microdroplets during curing of the epoxy resin matrix. Such polyacrylate liquid rubbers are available, for example, under the name 20208-XPA from Rohm and Haas.

In a third embodiment, this liquid rubber is a polyether amide terminated by carboxyl groups or epoxy groups. Such polyamides are in particular synthesized from reaction of amino-terminated polyethylene ethers or polypropylene ethers, such as are marketed, for example, under the name Jeffamine^{®} by Huntsman, or Hexion, with dicarboxylic acid anhydride, followed by reaction with epoxy resins, as described in Example 15 in conjunction with Example 13 of DE 2123033. Hydroxybenzoic acid or hydroxybenzoates can be used instead of dicarboxylic acid anhydride.

It is clear to the person skilled in the art that mixtures of liquid rubbers can of course be used, in particular mixtures of carboxyl-terminated or epoxy-terminated acrylonitrile/butadiene copolymers or derivatives thereof.

The toughener is preferably selected from the group consisting of unblocked or blocked polyurethane polymers, liquid rubbers, epoxy resin-modified liquid rubbers, and core/shell polymers.

In a preferred embodiment, the heat curable adhesive is an epoxy based adhesive which comprises a polyurethane based toughener.

During the investigations underlying the present invention, it has been observed that the presence of polyvinylchloride in the heat curable adhesives provides less favorable characteristics in terms of the tensile shear strength and the appearance of fracture. Thus, while adhesives containing polyvinylchloride as an additive (such as e.g. Terokal 8026 from Henkel) can be used in the present invention, it is preferred that the heat curable adhesive contains no substantial amount of polyvinylchloride, i.e. the heat curable adhesive contains no more than about 10 wt.-% polyvinylchloride constituents, preferably no more than about 5 wt.-% polyvinylchloride constituents, even more preferably no more than about 1 wt.-% polyvinylchloride constituents. Most preferably, the heat curable adhesive in the inventive assemblies and processes is devoid of polyvinylchloride constituents.

Heat curable adhesives, which can be used with particular advantage in the present invention include on the other hand, epoxy-polyurethane-based adhesives such as SikaPower 490/B3 from Sika or epoxy-based adhesives such as Betamate 1480 from Dow.

The heat curable adhesive may advantageously also comprise at least one filler.

Preferably, it is mica, talcum, kaolin, wollastonite, feldspar, syenith, chlorite, bentonite, montmorillonite, calcium carbonate (precipitated or milled), dolomite, quartz, silicic acid (pyrogen or precipitated), cristobalite, calcium oxide, aluminum hydroxide, magnesium oxide, hollow ceramic spheres, hollow glass spheres, hollow organic spheres, glass spheres, color pigments. Fillers mean both organically coated and also uncoated commercially available forms that are known to the person skilled in the art. Another example includes functionalized alumoxanes, such as those described, for example, in US 6,322,890.

Advantageously, the proportion of the filler amounts to 1 to 60% by weight, preferably 5 to 50% by weight, in particular 10 to 35% by weight, based on the weight of the total heat curable adhesive.

As additional components, the heat curable adhesive may also comprise thixotropic set-up agents such as, for example, fumed silica or nanoclays, strength modifiers, reactive diluents as well as other components known to the person skilled in the art.

Typically, the heat curable adhesive according to the above mentioned first and second alternatives of the inventive process comprises no chemical propellant or any other agent, which results in foaming of the composition.

On the other hand, the curable adhesive in the third and fourth alternative of the inventive process preferably comprises a chemical or physical propellant in an amount of up to 10 wt.-%, preferably in the range 0.1 to 5 wt.-% and more preferably 0.1 to 3 wt.-%. Preferred propellants are chemical propellants which release a gas on heating, more particularly to a temperature of 100 to 200°C. These may be exothermic propellants, such as azo compounds, hydrazine derivatives, semicarbazide or tetrazoles, for example. Preferred are azodicarbonamide and oxybis(benzenesulfonylhydrazide), which release energy on decomposition. Also suitable, are endothermic propellants, such as sodium bicarbonate/citric acid mixtures, for example. Chemical propellants of these kinds are available for example under the name Celogen^{™} from Chemtura. Likewise suitable are physical propellants of the kinds sold under the trade name Expancel^{™} by Akzo Nobel.

Particularly suitable propellants are those of the kind available under the trade name Expancel^{™} from Akzo Nobel or Celogen^{™} from Chemtura.

In the above mentioned second alternative of the inventive process the adhesive preferably has a low to moderate viscosity of about 100 to 1500 Pas at a temperature of 40 to 60°C in order to facilitate processing and to ensure an accurate application when the two substrates are assembled. At room temperature and in the temperature range of 10 to 30°C the viscosity is preferable moderate to high and in the range of 500 to 5000 Pas. This is in order to obtain correct sealing and to ensure that the injected adhesive does not leach out from the cavity, into which is has been injected.

In the above mentioned fourth alternative of the inventive process the adhesive preferably has a viscosity at 30°C, which is in the range of 8000 to 16000 Pas, as determined oscillographically by means of a rheometer with heatable plate with a 1000 µm gap, measurement plate diameter: 25 mm (plate/plate), deformation 0.01 to 5 Hz.

In the context of the present application, it is preferred, that the heat is applied by a means which heats and cures the adhesive in a time as short as possible and to a temperature as low as possible to sufficiently cure the adhesive. Concerning the time, there are no significant restrains, however, it is preferable that the heat is applied for a time of preferably ≤ 10 min, more preferably ≤ 5 min and most preferably ≤ 1 min.

The temperature, to which the adhesive is heated during the inventive processes depends on the curing mechanism of the adhesive. However, temperatures of between 100 and 250°C and preferably 160 to 180°C can be indicated as preferred in the context of the inventive process.

With regard to the above-indicated assembly, it is preferred that the substrate 1 is a profile and that the substrate 2 is an extruded or molded carrier which preferably fills at least 50 vol.-% of the hollow space in the profile, more preferably at least 60 vol.-% and most preferably at least 70 vol.-% of the hollow space. On the other hand, it is not necessary that the extruded or molded carrier fills the profile in its entirety, as also the adhesive bead will require some space. Therefore, it is preferred in the context of the present application that the extruded or molded carrier does not fill more than 95 vol.-% of the hollow space in the profile, more preferably not more than 90 vol.-% and even more preferably not more than 80 vol.-% of the hollow space in the profile.

Within the above-described assembly, it is further preferred, that it comprises a substrate 3 on the side of the substrate 2, which is opposite to the substrate 1 and a heat curable adhesive, which is positioned between the substrate 2 and the substrate 3, wherein the heat curable adhesive, which is positioned between the substrate 2 and the substrate 3, is cured only in a portion of less than 50% of the entire surface covered by the heat curable adhesive. Concerning the nature of the substrates 1, 2 and 3 and the composition of the heat-curable adhesive bead, the information provided above in the context of the inventive process applies vice versa.

If the inner volume is defined by both the substrates 1 and 3, e.g. because both have a U-shape, the above volume-percentages apply vice versa to this volume.

As explained above, the inventive processes and assembly is in particular useful in vehicle manufacture so that a further aspect of the present application is directed to a use of a process, as described above in the first to fourth alternative, in the manufacture of a vehicle. With regard to this use, it is particularly preferred that the assembly of heat curable adhesive, substrate 1 and substrate 2 is subjected to an electro-coating step comprising submerging the assembly in an e-coat fluid and inserting the assembly to an e-coat oven, wherein the adhesive is fully cured. If in the above it is referred to an "assembly of adhesive, substrate 1 and substrate 2", this assembly is an assembly, wherein heat has been applied to the heat-curable adhesive only in a portion of less than 50% of the entire surface covered by the heat curable adhesive to cure the adhesive as indicated in (iii) of the above process.

The above-described processes, assembly and use provide the advantages that the insertion of a plastic part and the application of the adhesive can be realized many steps early in the assembly process of the customer, i.e., before a metal part is subjected to an e-coat process. The invention thus provides an effective pre-fixation which is sufficiently robust that the part can be moved without displacement of the plastic part in the production line so that even manipulation of the parts by robots is possible. The energy required for the pre-fixation is low, as not the entire part but only a small portion thereof has to be heated with a punctual heat source such as infrared, microwaves or induction. Thus, the energy requirements of the pre-fixation is minimized which allows using the energy provided during a downstream e-coat process for the final complete curing of the adhesive. Therefore, the inventive process is particularly useful for body-in-white applications, i.e. applications before painting and before moving parts (doors, hoods, and deck lids as well as fenders), the motor, chassis sub-assemblies, or trim (glass, seats, upholstery, electronics, etc.) have been assembled in the frame structure.

### Brief description of the Figures

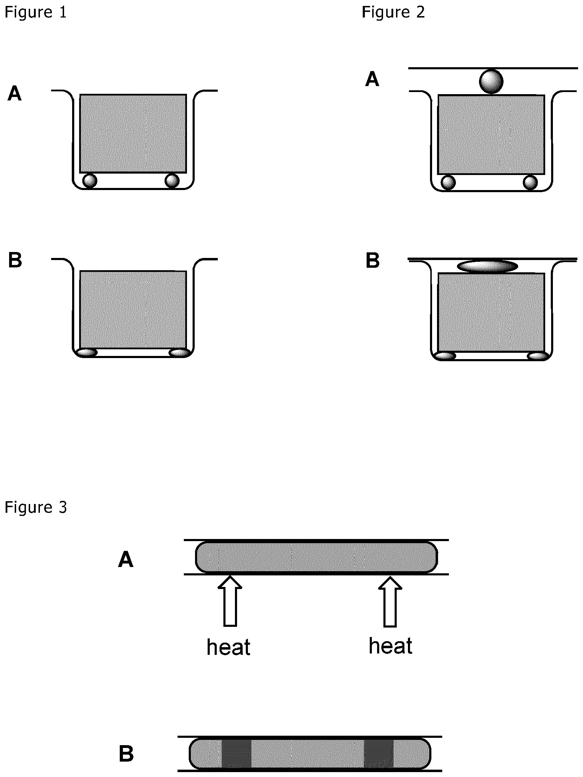

Fig. 1 **A** shows an assembly consisting of an U-shaped substrate 1 a rectangular substrate 2 (grey) and two heat-curable adhesive beads positioned between the two substrates. Item **B** of this Figure shows the same assembly with the adhesive in cured form.
Fig. 2 **A** shows a second embodiment with a U-shaped substrate 1, a rectangular substrate 2 (in grey) and a planar substrate 3, wherein adhesive beads have been positioned between the substrate 2 and the U-shaped substrate 1 as well as between a substrate 2 and the linear substrate 3. In item **B,** the respective adhesives have been cured.
Fig. 3 **A** shows an extended adhesive bead (light grey) between two substrates which is subjected to heat curing only at two small portions thereof (arrows). The heat cures the adhesive only in the portions indicated as dark grey in item **B** of Figure 3.

In the following, the present invention will be explained by way of examples which, however, are intended for illustrative purposes only. Hence, the present invention is not limited to the embodiments exemplified here in.

### Examples

### Example 1:

To test the inventive concept, different adhesives were pre-cured on aluminium by induction with different parameters. The obtained products were subjected to a comparison of the tensile shear strength and the reactivity. In addition, it was investigated whether the pre-curing and the subsequent full curing has an impact on the stability of the adhesive bond.

The following materials were used as adhesives:
a) SikaPower-490B3, Ch: 0011082913/1445 (Sika Italy, Cerano)
b) Betamate 1480 (Dow)
c) Terokal 8026 (Henkel)

The further test parameters were as follows:

| | |
|---|---|
| substrate: | AA6016 TiZr |
| cleaning: | none, as supplied |
| application: | RT |
| dimension of adhesive film: | 25 x 10 x 0.3 mm |
| traversing speed: | 10 mm/min |
| start temperature induction: | 50°C |
| pre-curing: | Induction apparatus EW2 |

The specific parameters of the induction test are provided in the following table:

**Table 1:**

| Programm | Temperature | Parameter - heating phase | | | Parameter - holding phase | | |
|---|---|---|---|---|---|---|---|
| 170-1 | 30 sec for 170°C | frequency 1: 13 | PWM: | 38 | frequency 2: 17,5 | VWR: | 95 |
| | 60 sec for 170°C | USS: 99 | | | VRP: 95 | VIR: | 10 |
| 180-1 | 30 sec for 180°C | frequency 1: 13 | PWM: | 41 | frequency 2: 17,5 | VWR: | 95 |
| | 60 sec for 180°C | USS: 99 | | | VRP: 95 | VIR: | 10 |
| 180-2 | 30 sec for 180°C | frequency 1: 13 | PWM: | 41 | frequency 2: 17,5 | VWR: | 95 |
| | 60 sec for 180°C | USS: 99 | | | VRP: 95 | VIR: | 10 |
| 190-1 | 30 sec for 190°C | frequency 1: 13 | PWM: | 44 | frequency 2: 17,5 | VWR: | 95 |
| | 60 sec for 190°C | USS: 99 | | | VRP: 95 | VIR: | 10 |
| 190-2 | 30 sec for 190°C | frequency 1: 13 | PWM: | 44 | frequency 2: 17,5 | VWR: | 95 |
| | 60 sec for 190°C | USS: 99 | | | VRP: 95 | VIR: | 10 |

| | | | | | | | |
|---|---|---|---|---|---|---|---|
| PWM: pulse width modulation, USS: Switchover treshhold, VWR: pre-control modulation, VPR: Multiplier proportional modulator value, VIR: Multiplier integral modulator value | | | | | | | |

The respective temperatures were measured on the bottom side of each sample.

After the initial curing the respective samples provided the tensile shear strength values as indicated in table 2:

**Table 2:**

| program | Time/temperature | Sika-Power-490B3 | Terokal 8026 | Betamate 1480 |
|---|---|---|---|---|
| 170-1 | 30 sec for 170°C | 2.6 MPa | 2.0 MPa | 5.3 MPa |
| | 60 sec for 170°C | | | |
| 180-1 | 30 sec for 180°C | 8.0 MPa | 5.3 MPa | 15.3 MPa |
| | 60 sec for 180°C | | | |
| 180-2 | 30 sec for 180°C | 3.5 MPa | 5.2 MPa | 9.7 MPa |
| | 30 sec for 180°C | | | |
| 190-1 | 30 sec for 190°C | 16.0 MPa | 7.0 MPa | 14.8 MPa |
| | 60 sec for 190°C | | | |
| 190-2 | 30 sec for 190°C | 9.0 MPa | 6.8 MPa | 12.6 MPa |
| | 30 sec for 190°C | | | |

The results of table 2 show that a temperature of 170°C provides a sufficient handling strength (> 2 MPa) with the tested adhesives to provide a process secure inductive pre-curing on aluminium. At higher pre-curing temperatures (≥ 180°C) and holding times of at least 60 sec all adhesives provide even higher strength. In contrast to Terokal 8026 both Sika-Power-490B3 and Betamate 1480 show a better appearance of fracture.

Pursuant to the initial curing the samples were cured for 25 min at 175°C which are typical conditions in the paint oven of the Automotive body process. The tensile shear strength values obtained after full cure are indicated in the following table 3:

**Table 3:**

| program | Time/temperature | Substrate | Sika-Power-490B3 | Beta mate 1480 |
|---|---|---|---|---|
| No pre-curing | | AA 6016 TiZr | 19.5 MPa | 20.5 MPa |
| | | 1,2 mm | | |
| 170-1 | 30 sec for 180°C | AA 6016 TiZr | 18.0 MPa | 20.5 MPa |
| | 60 sec for 180°C | 1,2 mm | | |
| 180-2 | 30 sec for 190°C | AA 6016 TiZr | 19.5MPa | 20.5 MPa |
| | 30 sec for 190°C | 1,2 mm | | |
| 190-2 | 30 sec for 190°C | AA 6016 TiZr | 19.5 MPa | 20.5 MPa |
| | 30 sec for 190°C | 1,2 mm | | |

The results show that for a pre-curing at 180°C of more, no difference could be detected between a sample which was inductively pre-cured and a sample which was not subjected to a pre-curing.

## Claims

1. Assembly comprising a substrate 1, a substrate 2 and a heat curable adhesive, which is positioned between the substrates 1 and 2,
wherein the heat curable adhesive is cured only in a portion of less than 50% of the entire surface covered by the heat curable adhesive,
wherein the substrate 1 is a metal substrate and has the shape of a profile and
the substrate 2 is an extruded or molded plastic carrier, which fills at least 50 vol.-% of the hollow space in the profile.

2. Assembly according to claim 1, wherein the substrate 2 fills at least 70 vol.-% of the hollow space in the profile.

3. Assembly according to claim 1 or 2 further comprising a substrate 3 on the side of the substrate 2, which is opposite the substrate 1, and a heat curable adhesive, which is positioned between the substrate 2 and the substrate 3, wherein the heat curable adhesive bead, which is positioned between the substrate 2 and the substrate 3 is cured only in a portion of less than 50% of the entire surface covered by the heat curable adhesive.

4. Process for the preparation of an assembly according to claims 1 to 3 comprising the steps of
(i) placing at least one heat curable adhesive bead on a substrate 1,
(ii) placing a further substrate 2 on the heat curable adhesive bead such that the substrate 1 and 2 are on opposite sides of the bead, and
(iii) applying heat to the heat curable adhesive only in a portion of less than 50% of the entire surface covered by the bead of the heat curable adhesive.

5. Process for the preparation of an assembly according to claims 1 to 3 comprising the steps of
(i) placing a substrate 1 on a substrate 2 in a manner, that there is a hollow space between the substrates 1 and 2,
(ii) injecting a flowable heat curable adhesive into the hollow space between the substrates 1 and 2,
(iii) applying heat to the flowable heat curable adhesive only in a portion of 50% of the entire surface covered by the flowable adhesive to cure the adhesive.

6. Process for the preparation of an assembly according to claims 1 to 3 comprising the steps of
(i) Placing a substrate 1 on a substrate 2, wherein the substrate 2 has a layer of heat curable adhesive one at least on side of the substrate and wherein the substrate 2 is placed on the substrate 1 in a manner so that there is direct contact between the substrate 1 and the curable adhesive on the substrate 2,
(ii) applying heat to the curable adhesive only in a portion of 50% of the entire surface covered by the heat curable adhesive to cure the adhesive.

7. Process for the preparation of an assembly according to claim 1, comprising the steps of
(i) placing an expandable heat curable adhesive on a substrate 2, wherein the expandable curable adhesive is self-adherent at 25°C,
(ii) placing a substrate 1 over the expandable heat curable adhesive on the substrate 2 such that the substrate 1 contacts the expandable heat curable adhesive, or that there is a gap between the expandable heat curable adhesive and the substrate 2, which is filled with the heat curable adhesive upon expansion,
(iii) applying heat to the expandable heat curable adhesive only in a portion of 50% of the entire surface covered by the heat curable adhesive to cure the adhesive.

8. Process according to any one of claim 4 to 7, wherein heat is applied to the heat curable adhesive only in a portion of less than 30%, preferably less than 20% and more preferably less than 10% of the entire surface covered by the bead, the flowable adhesive or the heat curable adhesive, respectively.

9. Process according to any one of claim 4 to 8, wherein heat is applied to more than one independent areas of the entire surface covered by the bead, the flowable adhesive or the heat curable adhesive, respectively.

10. Process according to any one of claims 4 to 9, wherein the heat is applied by means of induction, infrared or microwaves.

11. Process according to claim 4 or a thereon dependant claim, which further comprises the steps of
(iv) placing at least one heat curable adhesive bead on the side of substrate 2, which is opposite to the side facing the substrate 1,
(v) placing a further substrate 3 on the heat curable adhesive bead placed in step (iv) such that the substrates 2 and 3 are on opposite sides of the bead,
wherein the heat in step (iii) is applied to each of the heat curable adhesive beads only in a portion of less than 50% of the entire surface of the respective beads to cure the adhesive.

12. Process according to any one of claims 4 to 11, wherein the substrate 1 is a metal substrate, preferably an aluminium or steel substrate.

13. Process according to any one of claims 4 to 12, wherein the heat curable adhesive is an epoxy or polyurethane based adhesive.

14. Use of a process according to any one of claims 4 to 13 in the manufacture of a vehicle.

15. Use according to claim 14, wherein the assembly of heat curable adhesive, substrate 1 and substrate 2 is subjected to an electrocoating step comprising submerging the assembly in an e-coat fluid and inserting the assembly into an e-coat oven, wherein the adhesive is fully cured said oven.

## Patentansprüche

1. Baugruppe, umfassend ein Substrat 1, ein Substrat 2 und einen wärmehärtbaren Klebstoff, der zwischen den Substraten 1 und 2 angeordnet ist,
wobei der wärmehärtbare Klebstoff nur in einem Teilbereich von weniger als 50 % der gesamten Oberfläche, die von dem wärmehärtbaren Klebstoff bedeckt ist, gehärtet ist,
wobei das Substrat 1 ein Metallsubstrat ist und die Form eines Profils aufweist und das Substrat 2 ein extrudierter oder geformter Kunststoffträger ist, der wenigstens 50 Vol.-% des Hohlraums in dem Profil füllt.

2. Baugruppe gemäß Anspruch 1, wobei das Substrat 2 wenigstens 70 Vol.-% des Hohlraums in dem Profil füllt.

3. Baugruppe gemäß Anspruch 1 oder 2, ferner umfassend ein Substrat 3 an der Seite des Substrats 2, die dem Substrat 1 gegenüberliegt, und einen wärmehärtbaren Klebstoff, der zwischen dem Substrat 2 und dem Substrat 3 angeordnet ist, wobei die Raupe von wärmehärtbarem Klebstoff, die zwischen dem Substrat 2 und dem Substrat 3 angeordnet ist, nur in einem Teilbereich von weniger als 50 % der gesamten Oberfläche, die von dem wärmehärtbaren Klebstoff bedeckt ist, gehärtet ist.

4. Verfahren zur Herstellung einer Baugruppe gemäß Ansprüchen 1 bis 3, umfassend die Schritte
(i) Platzieren wenigstens einer Raupe von wärmehärtbarem Klebstoff auf ein Substrat 1,
(ii) Platzieren eines weiteren Substrats 2 auf die Raupe von wärmehärtbarem Klebstoff, so dass die Substrate 1 und 2 an gegenüberliegenden Seiten der Raupe angeordnet sind, und
(iii) Anwenden von Wärme auf den wärmehärtbaren Klebstoff nur in einem Teilbereich von weniger als 50 % der gesamten Oberfläche, die von der Raupe des wärmehärtbaren Klebstoffs bedeckt ist.

5. Verfahren zur Herstellung einer Baugruppe gemäß Ansprüchen 1 bis 3, umfassend die Schritte
(i) Platzieren eines Substrats 1 auf ein Substrat 2 auf eine solche Weise, dass ein Hohlraum zwischen den Substraten 1 und 2 vorliegt,
(ii) Einspritzen eines fließfähigen wärmehärtbaren Klebstoffs in den Hohlraum zwischen den Substraten 1 und 2,
(iii) Anwenden von Wärme auf den fließfähigen wärmehärtbaren Klebstoff nur in einem Teilbereich von 50 % der gesamten Oberfläche, die von dem fließfähigen Klebstoff bedeckt ist, um den Klebstoff zu härten.

6. Verfahren zur Herstellung einer Baugruppe gemäß Ansprüchen 1 bis 3, umfassend die Schritte
(i) Platzieren eines Substrats 1 auf ein Substrat 2, wobei das Substrat 2 eine Schicht von wärmehärtbarem Klebstoff auf wenigstens einer Seite des Substrats aufweist und wobei das Substrat 2 auf eine solche Weise auf dem Substrat 1 platziert wird, dass direkter Kontakt zwischen dem Substrat 1 und dem wärmehärtbaren Klebstoff auf dem Substrat 2 besteht,
(ii) Anwenden von Wärme auf den wärmehärtbaren Klebstoff nur in einem Teilbereich von 50 % der gesamten Oberfläche, die von dem wärmehärtbaren Klebstoff bedeckt ist, um den Klebstoff zu härten.

7. Verfahren zur Herstellung einer Baugruppe gemäß Anspruch 1, umfassend die Schritte
(i) Platzieren eines expandierbaren, wärmehärtbaren Klebstoffs auf ein Substrat 2, wobei der expandierbare Klebstoff bei 25°C selbstklebend ist,
(ii) Platzieren eines Substrats 1 über dem expandierbaren wärmehärtbaren Klebstoff auf dem Substrat 2, so dass das Substrat 1 mit dem expandierbaren, wärmehärtbaren Klebstoff Kontakt bildet, oder dass eine Lücke zwischen dem expandierbaren wärmehärtbaren Klebstoff und dem Substrat 2 vorliegt, die von dem wärmehärtbaren Klebstoff bei Expansion gefüllt wird,
(iii) Anwenden von Wärme auf den expandierbaren, wärmehärtbaren Klebstoff nur in einem Teilbereich von 50 % der gesamten Oberfläche, die von dem wärmehärtbaren Klebstoff bedeckt ist, um den Klebstoff zu härten.

8. Verfahren gemäß einem der Ansprüche 4 bis 7, wobei Wärme auf den wärmehärtbaren Klebstoff nur in einem Teilbereich von weniger als 30 %, vorzugsweise weniger als 20 % und bevorzugter weniger als 10 % der gesamten Oberfläche, die von der Raupe, dem fließfähigen Klebstoff bzw. dem wärmehärtbaren Klebstoff bedeckt ist, aufgebracht wird.

9. Verfahren gemäß einem der Ansprüche 4 bis 8, wobei Wärme auf mehr als einen unabhängigen Bereich der gesamten Oberfläche, die von der Raupe, dem fließfähigen Klebstoff bzw. dem wärmehärtbaren Klebstoff bedeckt ist, angewendet wird.

10. Verfahren gemäß einem der Ansprüche 4 bis 9, wobei die Wärme mithilfe von Induktion, Infrarot oder Mikrowellen aufgebracht wird.

11. Verfahren gemäß Anspruch 4 oder einem davon abhängigen Anspruch, ferner umfassend die Schritte
(iv) Platzieren wenigstens einer Raupe von wärmehärtbarem Klebstoff auf die Seite des Substrats 2, die der dem Substrat 1 zugewandten Seite gegenüberliegt,
(v) Platzieren eines weiteren Substrats 3 auf die bei Schritt (iv) platzierte Raupe von wärmehärtbarem Klebstoff, so dass die Substrate 2 und 3 an gegenüberliegenden Seiten der Raupe angeordnet sind,
wobei die Wärme bei Schritt (iii) auf jede der Raupen von wärmehärtbarem Klebstoff nur in einem Teilbereich von weniger als 50 % der gesamten Oberfläche der entsprechenden Raupen aufgebracht wird, um den Klebstoff zu härten.

12. Verfahren gemäß einem der Ansprüche 4 bis 11, wobei das Substrat 1 ein Metallsubstrat, vorzugsweise ein Aluminium- oder Stahlsubstrat, ist.

13. Verfahren gemäß einem der Ansprüche 4 bis 12, wobei der wärmehärtbare Klebstoff ein Klebstoff auf Epoxy- oder Polyurethanbasis ist.

14. Verwendung eines Verfahrens gemäß einem der Ansprüche 3 bis 13 bei der Herstellung eines Fahrzeugs.

15. Verwendung gemäß Anspruch 14, wobei die Baugruppe von wärmehärtbarem Klebstoff, Substrat 1 und Substrat 2 einem Elektrobeschichtungsschritt unterzogen wird, umfassend Eintauchen der Baugruppe in ein E-Beschichtungsfluid und Einführen der Baugruppe in einen E-Beschichtungsofen, wobei der Klebstoff in dem Ofen vollständig gehärtet wird.

## Revendications

1. Assemblage comprenant un substrat 1, un substrat 2, et un adhésif thermodurcissable qui est positionné entre les substrats 1 et 2,
dans lequel l'adhésif thermodurcissable est durci uniquement dans une partie correspondant à moins de 50 % de la surface totale recouverte par l'adhésif thermodurcissable,
dans lequel le substrat 1 est un substrat métallique et prend la forme d'un profilé et
le substrat 2 est un support en plastique extrudé ou moulé, qui remplit au moins 50 % en volume de l'espace creux dans le profilé.

2. Assemblage selon la revendication 1, dans lequel le substrat 2 remplit au moins 70 % en volume de l'espace creux dans le profilé.

3. Assemblage selon la revendication 1 ou 2 comprenant en outre un substrat 3 sur le côté du substrat 2 qui est à l'opposé du substrat 1, et un adhésif thermodurcissable qui est positionné entre le substrat 2 et le substrat 3, dans lequel le cordon d'adhésif thermodurcissable qui est positionné entre le substrat 2 et le substrat 3 est durci uniquement dans une partie correspondant à moins de 50 % de la surface totale recouverte par l'adhésif thermodurcissable.

4. Procédé de préparation d'un assemblage selon les revendications 1 à 3 comprenant les étapes de
(i) mise en place d'au moins un cordon d'adhésif thermodurcissable sur un substrat 1,
(ii) mise en place d'un autre substrat 2 sur le cordon d'adhésif thermodurcissable de telle sorte que les substrats 1 et 2 se trouvent sur des côtés opposés du cordon, et
(iii) application de chaleur à l'adhésif thermodurcissable uniquement dans une partie correspondant à moins de 50 % de la surface totale recouverte par le cordon de l'adhésif thermodurcissable.

5. Procédé de préparation d'un assemblage selon les revendications 1 à 3 comprenant les étapes de
(i) mise en place d'un substrat 1 sur un substrat 2 de manière à ce qu'il y ait un espace creux entre les substrats 1 et 2,
(ii) injection d'un adhésif thermodurcissable fluide à l'intérieur de l'espace creux entre les substrats 1 et 2,
(iii) application de chaleur à l'adhésif thermodurcissable fluide uniquement dans une partie correspondant à 50 % de la surface totale recouverte par l'adhésif fluide pour durcir l'adhésif.

6. Procédé de préparation d'un assemblage selon les revendications 1 à 3 comprenant les étapes de
(i) mise en place d'un substrat 1 sur un substrat 2, le substrat 2 ayant une couche d'adhésif thermodurcissable sur au moins un côté du substrat et le substrat 2 étant placé sur le substrat 1 de manière à ce qu'il y ait contact direct entre le substrat 1 et l'adhésif durcissable sur le substrat 2,
(ii) application de chaleur à l'adhésif durcissable uniquement dans une partie correspondant à 50 % de la surface totale recouverte par l'adhésif thermodurcissable pour durcir l'adhésif.

7. Procédé de préparation d'un assemblage selon la revendication 1, comprenant les étapes de
(i) mise en place d'un adhésif thermodurcissable expansible sur un substrat 2, l'adhésif durcissable expansible étant auto-adhésif à 25 °C,
(ii) mise en place d'un substrat 1 sur l'adhésif thermodurcissable expansible sur le substrat 2 de telle sorte que le substrat 1 touche l'adhésif thermodurcissable expansible, ou qu'il y ait un espace entre l'adhésif thermodurcissable expansible et le substrat 2, qui est rempli avec l'adhésif thermodurcissable lors de l'expansion,
(iii) application de chaleur à l'adhésif thermodurcissable expansible uniquement dans une partie correspondant à 50 % de la surface totale recouverte par l'adhésif thermodurcissable pour durcir l'adhésif.

8. Procédé selon l'une quelconque des revendications 4 à 7, dans lequel de la chaleur est appliquée à l'adhésif thermodurcissable uniquement dans une partie correspondant à moins de 30 %, de préférence moins de 20 % et mieux encore moins de 10 % de la surface totale recouverte par le cordon, l'adhésif fluide ou l'adhésif thermodurcissable, respectivement.

9. Procédé selon l'une quelconque des revendications 4 à 8, dans lequel de la chaleur est appliquée à plusieurs zones indépendantes de la surface totale recouverte par le cordon, l'adhésif fluide ou l'adhésif thermodurcissable, respectivement.

10. Procédé selon l'une quelconque des revendications 4 à 9, dans lequel la chaleur est appliquée par induction, infrarouge ou micro-ondes.

11. Procédé selon la revendication 4 ou une revendication dépendante de celle-ci, qui comprend en outre les étapes de
(iv) mise en place d'au moins un cordon d'adhésif thermodurcissable sur le côté du substrat 2 qui est à l'opposé du côté faisant face au substrat 1,
(v) mise en place d'un autre substrat 3 sur le cordon d'adhésif thermodurcissable placé à l'étape (iv) de telle sorte que les substrats 2 et 3 se trouvent sur des côtés opposés du cordon,
dans lequel la chaleur à l'étape (iii) est appliquée à chacun des cordons d'adhésif thermodurcissable uniquement dans une partie correspondant à moins de 50 % de la surface totale des cordons respectifs pour durcir l'adhésif.

12. Procédé selon l'une quelconque des revendications 4 à 11, dans lequel le substrat 1 est un substrat métallique, de préférence un substrat d'aluminium ou d'acier.

13. Procédé selon l'une quelconque des revendications 4 à 12, dans lequel l'adhésif thermodurcissable est un adhésif à base de résine époxy ou de polyuréthane.

14. Utilisation d'un procédé selon l'une quelconque des revendications 4 à 13 dans la fabrication d'un véhicule.

15. Utilisation selon la revendication 14, dans laquelle l'assemblage de l'adhésif thermodurcissable, du substrat 1 et du substrat 2 est soumis à une étape de revêtement électrolytique comprenant l'immersion de l'assemblage dans un fluide de revêtement électrolytique et l'insertion de l'assemblage dans un four de revêtement électrolytique, l'adhésif étant complètement durci dans ledit four.
